# EUROPÄISCHE PATENTSCHRIFT

(11) **EP 0 942 213 B1**
(45) Veröffentlichungstag und Bekanntmachung des Hinweises auf die Patenterteilung: **26.11.2003**
(21) Anmeldenummer: 99103445.5
(22) Anmeldetag: 23.02.1999
(51) Int. Cl.: F16K 31/02

(54) **Elektrothermisch betätigbares Kleinventil**
Thermo-electric micro valve
Microsoupape électrothermique

(30) Priorität: 09.03.1998 DE 29804124 U
(43) Veröffentlichungstag der Anmeldung: 15.09.1999
(73) Patentinhaber: HONEYWELL B.V., 1101 EA Amsterdam Z.O. (NL)
(72) Erfinder: Pragt, Johan H., 7741 ZG Coevorden (NL)
(74) Vertreter: Leson, Thomas Johannes Alois, Dipl.-Ing.

(56) Entgegenhaltungen:
- DD-A- 216 997
- DE-A- 3 809 597
- GB-A- 1 023 828
- GB-A- 1 281 060
- US-A- 3 798 894
- US-A- 4 067 539
- US-A- 5 318 268

## Beschreibung

Die Erfindung betrifft ein Ventil mit einseitig eingespanntem Ausleger, durch dessen freies Ende ein Ventilsitz verschließber ist. Ein derartiges Ventil ist beispielsweise aus Figur 3 der GB-A-1 281 060 bekannt.

Es ist auch bekannt, Kleinventile mit einem Bimetallbetätiger auszustatten, der entweder durch die Umgebungswärme verformt wird und damit das Ventil betätigt oder mit Hilfe eines das Bimetall umgebenden Heizdrahts aufgeheizt und auf diese Weise verformt werden kann. Mit der Neuerung soll ein möglichst kostengünstiges Ventil geschaffen werden. Dies gelingt durch die im Anspruch 1 gekennzeichnete Neuerung. Sie eignet sich besonders für Abblasventile in pneumatischen Reglern wie Servodruckreglern. Vorteilhafte Ausgestaltungen der Neuerung sind den Unteransprüchen entnehmbar.

Die Neuerung wird nachfolgend anhand zweier in der Zeichnung wiedergegebener Ausführungsbeispiele erläutert. Darin zeigt:
- Figur 1:: eine Draufsicht auf Grundplatte und Betätiger eines Ventils nach einem ersten Ausführungsbeispiel;
- Figur 2:: einen Schnitt längs der Linie B-B in Figur 1;
- Figur 3:: eine Draufsicht auf Grundplatte und Betätiger eines Ventils nach einem zweiten Ausführungsbeispiel; und
- Figur 4:: einen Schnitt längs der Linie D-D in Figur 3.

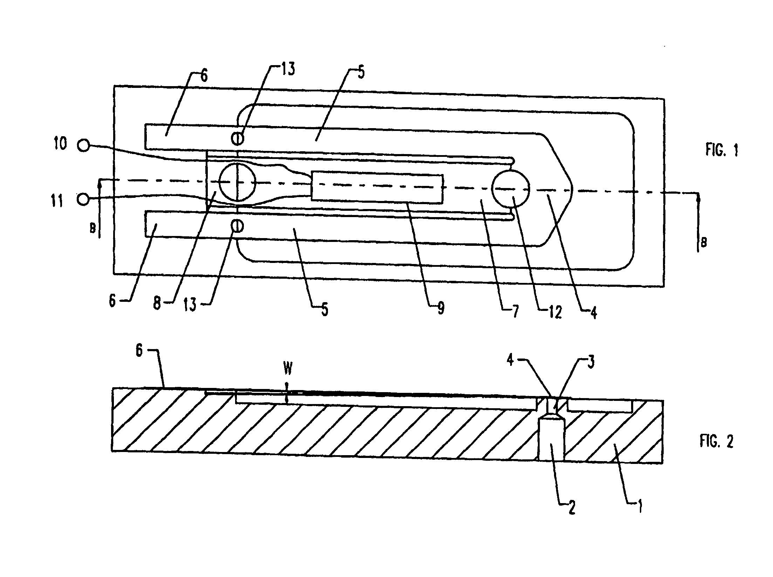

Ein erstes Ausführungsbeispiel eines erfindungsgemäßen Ventils zeigen Figuren 1 und 2. Bei diesem Ausführungsbeispiel ist eine Grundplatte 1 mit einem Luft- oder Gasanschluß 2 versehen, der in eine Düse 3 mündet. Diese bildet zusammen mit dem Quersteg 4 eines dreischenkligen Auslegers ein Ventil, z.B. das Abblasventil eines pneumatischen Reglers oder eines Servodruckreglers. Der dreischenklige Ausleger besteht aus zwei Außenschenkeln 5, welche im Bereich 6 an der Grundplatte 1 befestigt sind. sowie einen Mittelsteg 7, dessen Befestigungsstelle 8 an der Grundplatte 1 gegenüber den Befestigungsstellen 6 versetzt ist. Und zwar liegt die Befestigungsstelle 8. wie Figur 2 zeigt, einerseits in Erstreckungsrichtung des Betätigers 5, 7 etwas näher am freien Ende 4 und andererseits ist die Befestigungsstelle 8 bezogen auf die Grundplatte 1 etwas tiefer gesetzt, so daß sich zwischen den beiden Außenschenkeln 5 und dem Mittelsteg 7 ein spitzer Winkel W ergibt. Dieser verleiht dem Ausleger eine gewisse Vorspannung in Schließrichtung des Ventils 3,4. Der Ausleger besteht aus einem Federblech, und auf den Mittelsteg 7 ist eine Widerstandsheizschicht 9 aufgebracht, welche mit rückstellarmen elektrischen Leitungsanschlüssen 10 und 11 versehen ist.

Zum Betätigen des Ventils wird die Heizerschicht 9 an Strom gelegt, so daß sich infolge der Aufheizung des Mittelstegs 7 dieser ausdehnt und damit die Außenschenkel 5 bezogen auf Figur 2 nach oben wölbt und damit das Betätigungsende 4 vom Ventilsitz 3 wegbewegt. Damit wird das Ventil geöffnet. Die durch die Aufheizung des Mittelstegs 7 bewirkte Verformung wirkt somit der das Ventil schließenden Federvorspannung des Auslegers entgegen. Um zu verhindern, daß die im Mittelsteg 7 vom Heizer 9 erzeugte Wärme einerseits über das Befestigungsende 8 zur Grundplatte 1 und andererseits über das Verbindungsende 4 in die Außenschenkel abfließt, ist der Mittelsteg sowohl in der Nähe seines Befestigungsendes 8 als auch in der Nähe des Verbindungsstegs 4 mit einer seinen Wärmeleitquerschnitt verringernden Ausnehmung, im gezeigten Fall einem Loch 12 versehen. Die verringernde Ausnehmung wirkt auch als Gelenk. Das Ventil zeichnet sich durch einen sehr einfachen mechanischen Aufbau und geringen Stromverbrauch aus. Statt das bewegliche Ende 4 des Auslegers selbst als Ventilschließkörper zu verwenden kann an diesem Ende ein besonderer Schließkörper befestigt oder angeformt sein.

An dem Ventilsitz 3 kann ein besonderer Schließkörper, wie z.B. ein Dichtungskörper bzw. ein O-Ring aus Gummi oder dergleichen, angeordnet sein. Hindurch kann das Schließverhalten des Ventils verbessert werden.

In die Außenschenkel 5 ist in der Nähe der Befestigungstellen 6 jeweils eine Ausnehmung, im gezeigten Ausführungsbeispiel ein Loch 13, eingebracht. Diese arbeiten dann wie ein Gelenk.

Anstelle eines starren Ventilsitzes kann auch ein verstellbarer, insbesondere ein höhenverstellbarer, Ventilsitz vorgesehen sein. Hierdurch kann der Abstand zum Ende 4 sowie die auf das Ende 4 einwirkende Kraft eingestellt werden. Hierdurch kann abermals das Schließverhalten des Ventils verbessert werden.

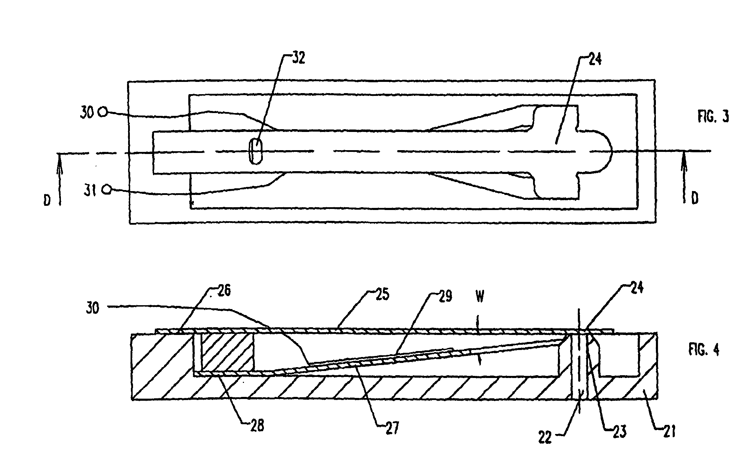

Figuren 3 und 4 zeigen ein zweites Ausführungsbeispiel des erfindungsgemäßen Ventils. Auch bei dem dort gezeigten Ausführungsbeispiel ist eine Grundplatte 21 mit einem Luftoder Gasanschluß versehen. Der Luft- oder Gasanschluß 22 kann in eine der Einfachheit halber nicht weiter dargestellte Düse münden. Zusammen mit einem Quersteg 24 eines zweischenkligen Auslegers wird ein Ventil gebildet, z.B. ein Ablaßventil eines pneumatischen Reglers. Der zweischenklige Ausleger besteht aus einem ersten Schenkel 25 und einem zweiten Schenkel 27. Der erste Schenkel 25 ist im Bereich 26 an der Grundplatte 21 befestigt. Der zweite Schenkel 27 ist an der Befestigungsstelle 28 an der Grundplatte 21 befestigt. Die Befestigungsstelle 28 des Schenkels 27 ist gegenüber der Befestigungsstelle 26 des Schenkels 25 nach unten in der Höhe versetzt. Des weiteren liegt die Befestigungsstelle 28, wie Figur 4 zeigt, näher am freien Ende 24 als die Befestigungsstelle 26 des Schenkels 25. Zwischen den beiden Schenkeln 25, 27 ist ein spitzer Winkel W eingeschlossen. Der Winkel W verleiht dem Ausleger wiederum eine gewisse Vorspannung in Schließrichtung des Ventils. Auf dem bereichsweise nach unten versetzten Schenkel 27 ist eine Heizwiderstandsschicht 29 aufgebracht, welche mit rückstellarmen elektrischen Leistungsanschlüssen 30 und 31 versehen ist.

Zum Betätigen des Ventils gemäß Figuren 3 und 4 wird die Heizerschicht 29 an Strom gelegt, so daß sich infolge der Aufheizung des Stegs 27 dieser ausdehnt und infolge dessen das Betätigungsende 24 abgehoben werden kann. Damit wird das Ventil geöffnet.

Die Ventile gemäß den Ausführungsbeispielen nach Figuren 1 und 2 sowie Figuren 3 und 4 arbeiten demnach nach demselben Prinzip. Zur Vermeidung unnötiger Wiederholungen wird daher hinsichtlich des zweiten Ausführungsbeispiels auf die zu dem Ausführungsbeispiel gemaß Figuren 1 und 2 angestellten Ausführungen verwiesen. An dieser Stelle sei lediglich nochmals in aller Kürze angemerkt, daß auch der Ventilsitz des Ausführungsbeispiels gemäß Figuren 3 und 4 mit einem besonderen Schließkörper, z.B. einem Dichtungskörper aus Gummi, versehen sein kann. Des weiteren kann der Ventilsitz des Ausführungsbeispiels gemäß Figuren 3 und 4 höhenverstellbar ausgebildet sein. Ferner ist es möglich, die Schenkel 25 bzw. 27 des Ausführungsbeispiels gemäß Figuren 3 und 4 mit Ausnehmungen zu versehen, um den wärmeleitenden Querschnitt derselben zu verringern. Figur 3 zeigt eine derartige Ausnehmung 32 im Bereich des Schenkels 25.

## Patentansprüche

1. Ventil mit einseitig eingespanntem Ausleger, durch dessen freies Ende ein Ventilsitz verschließbar ist
**dadurch gekennzeichnet, daß**
a) der Ausleger mindestens zweischenklig (5, 7; 25, 27) ausgebildet ist;
b) die Schenkel (5, 7; 25, 27) des Auslegers an einem freien Ende (4; 24) miteinander verbunden sind;
c) zu dem freien Ende (4; 24) gegenüberliegende Enden (6, 8; 26, 28) der Schenkel (5, 7; 25, 27) an einer zugleich den Ventilsitz tragenden Grundplatte (1; 21) befestigt sind;
d) auf einem Schenkel (7; 27) ein Heizwiderstand (9; 29) angeordnet ist; und
e) rückstellarme elektrische Anschlüsse (10, 11; 30, 31) für den Heizwiderstand (9; 29) vorgesehen sind, um durch Stromzufuhr und hierdurch bedingte thermische Verformung des den Heizwiderstand (9; 29) tragenden Schenkels (7; 27) das freie Ende (4; 24) des Auslegers in bezug auf den Ventilsitz zu bewegen.

2. Ventil nach Anspruch 1, **dadurch gekennzeichnet, daß**
a) der Ausleger dreischenklig (5, 7) ausgebildet ist;
b) der Heizwiderstand (9) auf einem Mittelsteg (7) angeordnet ist;
c) durch Stromzufuhr und hierdurch bedingte thermische Verformung des Mittelstegs (7) das freie Ende (4) des Auslegers in bezug auf den Ventilsitz (3) bewegbar ist; und
d) der Mittelsteg (7) an seinem Befestigungsende (8) und am freien Ende (4) durch Ausnehmungen (12) in seinem wärmeleitenden Querschnitt verringert ist.

3. Ventil nach Anspruch 2, **dadurch gekennzeichnet, daß** der Mittelsteg (7) gegenüber den Außenschenkeln (5) bereichsweise nach unten versetzt ist.

4. Ventil nach Anspruch 1, 2, oder 3 **dadurch gekennzeichnet, daß** der Heizwiderstand durch eine auf dem Mittelsteg (7) aufgebrachte Heizwiderstandsschicht (9) gebildet ist.

5. Ventil nach Anspruch 1, 2, 3 oder 4, **dadurch gekennzeichnet, daß** das freie Ende (4) des Auslegers einen Ventilschließkörper trägt oder bildet.

6. Ventil nach einem oder mehreren der vorhergehenden Ansprüche, **dadurch gekennzeichnet, daß** dem Ventilsitz ein Dichtungskörper aus Gummi oder dergleichen zugeordnet ist.

7. Ventil nach einem oder mehreren der vorhergehenden Ansprüche, **dadurch gekennzeichnet, daß** die Befestigungsstelle (8) des Mittelstegs (7) gegenüber den Befestigungsstellen (6) der Außenschenkel (5) in der Höhe versetzt ist, derart, daß bei geschlossenem Ventil (3, 4) die Ebene des Mittelstegs (7) einen spitzen Winkel (W) mit den Ebenen der Außenschenkel (5) anschließt.

8. Ventil nach einem oder mehreren der vorhergehenden Ansprüche, **dadurch gekennzeichnet, daß** der Ventilsitz höhenverstellbar ist.

9. Ventil nach Anspruch 1, **dadurch gekennzeichnet, daß**
a) der Ausleger zweischenklig (25, 27) ausgebildet ist;
b) der Heizwiderstand (29) auf einem bereichsweise nach unten versetzten Schenkel (27) angeordnet ist;
c) durch Stromzufuhr und hierdurch bedingte thermische Verformung des nach unten versetzten Schenkels (27) das freie Ende (24) des Auslegers in bezug auf den Ventilsitz bewegbar ist;
d) der nach unten versetzte Schenkel (27) an seinem Befestigungsende (28) und am freien Ende (24) in seinem wärmeleitenden Querschnitt verringert ist.

10. Ventil nach Anspruch 1 oder 9, **dadurch gekennzeichnet, daß** die Befestigungsstelle (28) des den Heizwiderstand (29) tragenden Schenkel (27) gegenüber der Befestigungsstelle (26) des anderen Schenkels (25) derart in der Höhe versetzt ist, daß bei geschlossenem Ventil (23, 24) zwischen den Ebenen der beiden Schenkel (25, 27) ein spitzer Winkel (W) eingeschlossen ist.

11. Ventil nach Anspruch 9 oder 10, **dadurch gekennzeichnet, daß** der Heizwiderstand (29) als Heizwiderstandsschicht ausgebildet ist.

12. Ventil nach einem oder mehreren der Ansprüche 9 bis 11, **dadurch gekennzeichnet , daß** das freie Ende (24) einen Ventilschließkörper trägt.

13. Ventil nach einem oder mehreren der Ansprüche 9 bis 12, **dadurch gekennzeichnet, daß** dem Ventilsitz ein Dichtungskörper zugeordnet ist.

14. Ventil nach einem oder mehreren der Ansprüche 9 bis 13, **dadurch gekennzeichnet, daß** der Ventilsitz höhenverstellbar ist.

## Claims

1. Valve, with a cantilever which is clamped on one side and by the free end of which a valve seat can be closed, **characterized in that**
a) the cantilever is of at least two-limb design (5, 7; 25, 27);
b) the limbs (5, 7; 25, 27) of the cantilever are connected to one another at a free end (4; 24);
c) ends (6, 8; 26, 28) of the limbs (5, 7; 25, 27) which are located opposite the free end (4; 24) are fastened to a baseplate (1; 21) which at the same time carries the valve seat;
d) a heating resistor (9; 29) is arranged on one limb (7; 27); and
e) low-return electrical connections (10, 11; 30, 31) for the heating resistor (9; 29) are provided, in order to move the free end (4; 24) of the cantilever with respect to the valve seat by the supply of current and the consequently induced thermal deformation of the limb (7; 27) carrying the heating resistor (9; 29).

2. Valve according to Claim 1, **characterized in that**
a) the cantilever is of three-limb design (5, 7);
b) the heating resistor (9) is arranged on a middle web (7);
c) the free end (4) of the cantilever can be moved with respect to the valve seat (3) by the supply of current and the consequently induced thermal deformation of the middle web (7); and
d) the middle web (7) is reduced in its heat-conducting cross section at its fastening end (8) and at the free end (4) by means of recesses (12).

3. Valve according to Claim 2, **characterized in that** the middle web (7) is offset downwards, in regions, with respect to the outer limbs (5).

4. Valve according to Claim 1, 2 or 3, **characterized in that** the heating resistor is formed by a heating resistor layer (9) applied to the middle web (7).

5. Valve according to Claim 1, 2, 3 or 4, **characterized in that** the free end (4) of the cantilever carries or forms a valve-closing body.

6. Valve according to one or more of the preceding claims, **characterized in that** the valve seat is assigned a sealing body consisting of rubber or the like.

7. Valve according to one or more of the preceding claims, **characterized in that** the fastening point (8) of the middle web (7) is offset vertically with respect to the fastening points (6) of the outer limbs (5), in such a way that, with the valve (3, 4) closed, the plane of the middle web (7) forms an acute angle (W) with the planes of the outer limbs (5).

8. Valve according to one or more of the preceding claims, **characterized in that** the valve seat is vertically adjustable.

9. Valve according to Claim 1, **characterized in that**
a) the cantilever is of two-limb design (25, 27);
b) the heating resistor (29) is arranged on a limb (27) which is offset downwards in regions;
c) the free end (24) of the cantilever can be moved with respect to the valve seat by the supply of current and the consequently induced thermal deformation of the downwardly offset limb (27);
d) the downwardly offset limb (27) is reduced in its heat-conducting cross section at its fastening end (28) and at the free end (24).

10. Valve according to Claim 1 or 9, **characterized in that** the fastening point (28) of the limb (27) carrying the heating resistor (29) is offset vertically with respect to the fastening point (26) of the other limb (25), in such a way that, with the valve (23, 24) closed, an acute angle (W) is formed between the planes of the two limbs (25, 27).

11. Valve according to Claim 9 or 10, **characterized in that** the heating resistor (29) is designed as a heating resistor layer.

12. Valve according to one or more of Claims 9 to 11, **characterized in that** the free end (24) carries a valve-closing body.

13. Valve according to one or more of Claims 9 to 12, **characterized in that** the valve seat is assigned a sealing body.

14. Valve according to one or more of Claims 9 to 13, **characterized in that** the valve seat is vertically adjustable.

## Revendications

1. Soupape comprenant un bras encastré unilatéralement au moyen de l'extrémité libre duquel un siège de soupape peut être fermé, **caractérisée en ce que**
a) le bras est d'une configuration à au moins deux branches (5, 7 ; 25, 27) ;
b) les branches (5, 7 ; 25, 27) du bras sont reliées l'une à l'autre à une extrémité libre (4 ; 24) ;
c) les extrémités (6, 8 ; 26, 28) des branches (5, 7 ; 25, 27) qui sont à l'opposé de l'extrémité libre (4 ; 24) sont fixées à une plaque de base (1 ; 21) qui porte en même temps le siège de soupape ;
d) une résistance chauffante (9 ; 29) est disposée sur une branche (7 ; 27) ; et
e) des connexions électriques (10, 11 ; 30, 31) à faible force de rappel sont prévues pour la résistance chauffante (9 ; 29), pour mettre l'extrémité libre (4 ; 24) du bras en mouvement par rapport au siège de soupape sous l'effet d'une amenée de courant et de la déformation thermique résultante de la branche (7 ; 27) qui porte la résistance chauffante (9 ; 29).

2. Soupape selon la revendication 1, **caractérisée en ce que**
a) le bras est d'une configuration à trois branches (5, 7) ;
b) la résistance chauffante (9) est disposée sur une branche centrale (7) ;
c) l'extrémité libre (4) du bras peut être mise en mouvement par rapport au siège de soupape (3) sous l'effet d'une amenée de courant et de la déformation thermique résultante de la branche centrale (7) ;
d) la branche centrale (7) est rétrécie dans sa section conductrice de la chaleur à son extrémité de fixation (8) et à l'extrémité libre (4) par des évidements (12) ;

3. Soupape selon la revendication 2, **caractérisée en ce que** la branche centrale (7) est déportée vers le bas par endroits par rapport aux branches extérieures (5).

4. Soupape selon la revendication 1, 2 ou 3, **caractérisée en ce que**, la résistance chauffante est formée par une couche formant résistance chauffante (9) appliquée sur la branche centrale (7).

5. Soupape selon la revendication 1, 2, 3 ou 4, **caractérisée en ce que** l'extrémité libre (4) du bras porte ou forme un corps obturateur de soupape.

6. Soupape selon une ou plusieurs des revendications précédentes, **caractérisée en ce qu'**un corps d'étanchéité en caoutchouc ou analogue est combiné au siège de soupape.

7. Soupape selon une ou plusieurs des revendications précédentes, **caractérisée en ce que** la zone de fixation (8) de la branche centrale (7) est décalée en hauteur par rapport aux zones de fixation (6) des branches extérieures (5) de telle manière que, lorsque la soupape (3, 4) est fermée, le plan de la branche centrale (7) forme un angle aigu (W) avec les plans des branches extérieures (5).

8. Soupape selon une ou plusieurs des revendications précédentes, **caractérisée en ce que** le siège de soupape est réglable en hauteur.

9. Soupape selon la revendication 1, **caractérisée en ce que**
a) le bras est d'une configuration à deux branches (25, 27) ;
b) la résistance chauffante (29) est disposée sur une branche (27) qui est déportée vers le bas par endroits ;
c) l'extrémité libre (24) du bras peut être mise en mouvement par rapport au siège de soupape sous l'effet d'une amenée de courant et de la déformation thermique résultante de la branche (27) décalée vers le bas ;
d) la branche (27) décalée vers le bas est rétrécie dans sa section conductrice de la chaleur à son extrémité de fixation (28) et à l'extrémité libre (24).

10. Soupape selon la revendication 1 ou 9, **caractérisé en ce que** la zone de fixation (28) de la branche (27) qui porte la résistance chauffante (29) est décalée en hauteur par rapport à la zone de fixation (26) de l'autre branche (25) de telle manière que, lorsque la soupape (23, 24) est fermée, un angle aigu (W) est formé entre les plans des deux branches (25, 27).

11. Soupape selon la revendication 9 ou 10, **caractérisée en ce que** la résistance chauffante (29) est constituée par une couche formant résistance chauffante.

12. Soupape selon une ou plusieurs des revendications 9 à 11, **caractérisée en ce que** l'extrémité libre (24) porte un corps obturateur de soupape.

13. Soupape selon une ou plusieurs des revendications 9 à 12, **caractérisée en ce qu'**un corps d'étanchéité est combiné au siège de soupape.

14. Soupape selon une ou plusieurs des revendications 9 à 13, **caractérisée en ce que** le siège de soupape est réglable en hauteur.
